# DEMANDE DE BREVET EUROPEEN

(11) **EP 4 498 277 A1**
(43) Date de publication de la demande: **29.01.2025**
(21) Numéro de dépôt: 24191061.1
(22) Date de dépôt: 26.07.2024
(51) Int. Cl.: G06F 30/15, G06F 111/10, G06F 21/60

(54) **PROCÉDÉ DE GÉNÉRATION D'UNE MAQUETTE NUMÉRIQUE SÉCURISÉE D'UN OBJET ET DISPOSITIF ASSOCIÉ**

(30) Priorité: 28.07.2023 FR 2308193
(71) Demandeur: Dassault Aviation, 75008 Paris (FR)
(72) Inventeur: RAZIER, Thomas, 92552 SAINT-CLOUD CEDEX (FR)
(74) Mandataire: Lavoix

(57) **Abrégé**

Le procédé de génération d'une maquette numérique sécurisée (30), comprend le calcul de coordonnées de vertex sécurisés par application de matrices de transformation égales à la somme de matrices de translation, de rotation et de distorsion, à des coordonnées de vertex originaux.
L'étape de calcul des coordonnées de vertex sécurisés comprend :
- le calcul des coordonnées de vertex sécurisés principaux associés à une pièce principale par application de matrices de transformation aux coordonnées de vertex originaux principaux correspondant ; et
- le calcule des coordonnées de vertex sécurisés auxiliaires associés à une pièce auxiliaire montée sur la pièce principale, par application d'une matrice de transformation simplifiée égale à la somme d'une matrice de translation, d'une matrice de rotation et d'une matrice de distorsion nulle, aux coordonnées de vertex originaux auxiliaires correspondant.

## Description

La présente invention concerne un procédé de génération d'une maquette numérique sécurisée d'un objet à partir d'une maquette numérique originale dudit objet, le procédé étant mis en oeuvre par ordinateur,

le procédé comprenant une étape de calcul de coordonnées de vertex de maillage sécurisés de la maquette numérique sécurisée par application de matrices de transformation à des coordonnées de vertex de maillage originaux de la maquette numérique originale, les matrices de transformation étant chacune égale à la somme d'une matrice de translation, d'une matrice de rotation et d'une matrice de distorsion.

Par exemple, l'objet est une portion d'aéronef.

Un tel procédé permet de modifier des paramètres géométriques de la maquette numérique afin de pouvoir la diffuser ou l'exploiter dans un contexte illustratif, documentaire ou visuel tout en conservant secret les valeurs originales desdits paramètres géométriques.

Certaines formes de l'objet, notamment lorsque l'objet est un aéronef, présentent des particularités pouvant affecter par exemple l'agencement ou/et l'aérodynamisme. Il peut donc être nécessaire, avant la transmission à un tiers ou à une diffusion publique, de modifier légèrement les formes en les déformant.

Dans le contexte d'une portion d'aéronef qui comprend en général un nombre important de pièces montées les unes sur les autres, il est nécessaire d'appliquer les matrices de transformation sur les représentations numériques de chacune des pièces de la portion d'aéronef afin d'éviter un chevauchement de ces représentations numériques et de conserver une cohérence de l'ensemble de la maquette numérique.

Toutefois, appliquer les matrices de transformation sur chacune des pièces de la portion d'aéronef aboutit à réaliser un nombre considérable de calculs complexes.

La génération de la maquette numérique sécurisée requiert alors une puissance de calcul importante et un temps de calcul considérable.

Le but de l'invention est alors de proposer un procédé de génération d'une maquette numérique sécurisée d'un objet qui soit peu gourmand en ressources de calcul et qui soit rapide dans son implémentation tout en permettant l'obtention d'une maquette numérique sécurisée qui soit cohérente.

A cet effet, l'invention a pour objet un procédé de génération tel que décrit ci-dessus et dans lequel l'étape de calcul des coordonnées de vertex de maillage sécurisés comprend :
- une sous-étape de calcul des coordonnées de vertex de maillage sécurisés principaux associés à au moins une pièce principale de l'objet par application de matrices de transformation aux coordonnées de vertex de maillage originaux principaux associés à l'au moins une pièce principale de l'objet ; et
- une sous-étape de calcul des coordonnées de vertex de maillage sécurisés auxiliaires associés à au moins une pièce auxiliaire de l'objet montée sur l'au moins une pièce principale, par application d'une matrice de transformation simplifiée aux coordonnées de vertex de maillage originaux auxiliaires associés à l'au moins une pièce auxiliaire de l'objet, la matrice de transformation simplifiée étant égale à la somme d'une matrice de translation, d'une matrice de rotation et d'une matrice de distorsion nulle.

Le calcul des coordonnées de vertex de maillage sécurisés est ainsi simplifié par l'application de matrices de transformation simplifiées (n'impliquant pas de distorsion) aux coordonnées de vertex de maillage originaux associés à certaines pièces de la portion d'aéronef.

Suivant d'autres aspects avantageux de l'invention, le procédé comprend une ou plusieurs des caractéristiques suivantes, prises isolément ou suivant toutes les combinaisons techniquement possibles :
- au moins une matrice de transformation appliquée lors de la sous-étape de calcul des coordonnées de vertex de maillage sécurisés principaux associés à l'au moins une pièce principale de l'objet est égale à la somme d'une matrice de translation, d'une matrice de rotation et d'une matrice de distorsion non-nulle ;
- lors de la sous-étape de calcul des coordonnées de vertex de maillage sécurisés auxiliaires, des coordonnées de vertex de maillage sécurisés auxiliaires associés à une pluralité de pièces auxiliaires, notamment à une pluralité de pièces auxiliaires identiques, montées sur une même pièce principale, sont calculées par application d'une même matrice de transformation simplifiées aux coordonnées de vertex de maillage originaux auxiliaires associés à chacune de ces dites pièces auxiliaires ;
- l'objet comprend une pluralité de pièces, le procédé comprenant une étape de classification de chaque pièce en tant que pièce principale ou pièce auxiliaire,
chaque pièce étant classifiée comme étant :
- une pièce principale si la valeur de la diagonale d'une boîte englobante associée à ladite pièce est supérieure ou égale à une valeur seuil ;
- une pièce auxiliaire si la valeur de la diagonale d'une boîte englobante associée à ladite pièce est inférieure à la valeur seuil ;
   - la valeur seuil est telle qu'un nombre d'occurrences des pièces de l'objet dont une taille de la diagonale de la boîte englobante correspondante est inférieure à la valeur seuil, est supérieur à un nombre d'occurrences cible ;
   - la sous-étape de calcul des coordonnées de vertex de maillage sécurisés auxiliaires associée à une pièce auxiliaire comprend :
- le calcul des coordonnées d'un centre de gravité original et des composantes de vecteurs d'axes d'inertie originaux de ladite pièce auxiliaire ;
- le calcul des coordonnées d'un centre de gravité sécurisé par application d'une matrice de translation locale aux coordonnées du centre de gravité original ;
- le calcul des composantes des vecteurs d'axes d'inertie sécurisés par application d'une matrice de rotation locale aux composantes des vecteurs des axes d'inertie originaux ;
- le calcul d'une matrice de transformation simplifiée à partir de la matrice de translation locale et de la matrice de rotation locale ;
ladite matrice de transformation simplifiée étant appliquée aux coordonnées des vertex de maillage originaux auxiliaires associés à ladite pièce auxiliaire pour calculer les coordonnées de vertex de maillage sécurisés auxiliaires associés à ladite pièce auxiliaire ;
- les portions de maquette numérique sécurisée correspondant aux coordonnées de vertex de maillage sécurisés principaux et les portions de maquette numérique sécurisées correspondant aux coordonnées de vertex de maillage sécurisés auxiliaires présentent un chevauchement sensiblement nul ;
- le procédé comprend en outre une étape de calcul des coordonnées des vertex de maillage originaux de la maquette numérique originale comportant un maillage de l'objet pour obtenir une maquette numérique originale brute de l'objet ;
- l'étape de calcul des coordonnées des vertex de maillage originaux comprend une sous-étape d'optimisation de la maquette numérique originale brute ;
- la sous-étape d'optimisation comprend une décimation de la maquette numérique originale brute afin d'obtenir une maquette numérique originale décimée de l'objet, ladite maquette numérique originale décimée étant utilisée pour l'étape de calcul des coordonnées de vertex de maillage sécurisés de la maquette numérique sécurisée ;
- la sous-étape d'optimisation comprend un enrichissement d'au moins une partie de la maquette numérique originale brute à enrichir afin d'obtenir une partie de maquette numérique originale enrichie, ladite partie de maquette numérique originale enrichie étant utilisée pour l'étape de calcul des coordonnées de vertex de maillage sécurisés de la maquette numérique sécurisée,
l'enrichissement comprenant l'augmentation du nombre de mailles relatifs à ladite partie de la maquette numérique originale brut à enrichir ; et
le procédé comprend en outre :
- une étape d'enregistrement dans une base de données des coordonnées de vertex de maillage sécurisés principaux associés à chaque pièce principale de l'objet pour chaque matrice de transformation ;
- une étape d'enregistrement dans la base de données des cordonnées de vertex de maillage sécurisés auxiliaires associés à chaque pièce auxiliaire de l'objet pour chaque matrice de transformation simplifiée.

L'invention concerne en outre un dispositif de génération d'une maquette numérique sécurisée d'un objet à partir d'une maquette numérique originale dudit objet, propre à mettre en oeuvre le procédé tel que décrit ci-dessus, le dispositif comprenant une unité de calcul des coordonnées des vertex de maillage sécurisés de la maquette numérique sécurisée par application de matrices de transformation aux coordonnées de vertex de maillage originaux de la maquette numérique originale, les matrices de transformation étant chacune égale à la somme d'une matrice de translation, d'une matrice de rotation et d'une matrice de distorsion,
l'unité de calcul comprenant :
- un module de calcul des coordonnées de vertex de maillage sécurisés principaux configuré pour calculer les coordonnées des vertex de maillage sécurisés principaux associés à l'au moins une pièce principale de l'objet par application des matrices de transformation aux coordonnées des vertex de maillage originaux principaux associés à l'au moins une pièce principale de l'objet ;
- un module de calcul des coordonnées de vertex de maillage sécurisés auxiliaires configuré pour calculer les coordonnées des vertex de maillage sécurisés auxiliaires associés à l'au moins une pièce auxiliaire de l'objet montée sur l'au moins une pièce principale, par application d'une matrice de transformation simplifiée aux coordonnées des vertex de maillage originaux auxiliaires associés l'au moins une pièce auxiliaire de l'objet,
la matrice de transformation simplifiée étant égale à la somme d'une matrice de translation, d'une matrice de rotation et d'une matrice de distorsion nulle.

L'invention apparaîtra plus clairement à la lecture de la description qui va suivre, donnée uniquement à titre d'exemple non limitatif, et faite en référence aux dessins dans lesquels :
[Fig 1] la figure 1 est une représentation schématique d'une maquette numérique originale et d'une maquette numérique sécurisée d'un objet, notamment d'un aéronef, superposées l'une sur l'autre ;
[Fig 2] la figure 2 est une représentation schématique d'une maquette numérique originale et d'une maquette numérique sécurisée d'une portion d'aile d'un aéronef, ladite portion d'aile comprenant une pièce principale et une pièce auxiliaire ;
[Fig 3] la figure 3 est une représentation schématique de la sous-étape de calcul des coordonnées de vertex de maillage sécurisées principaux associés à une pièce principale présentant une forme simplifiée de cube ;
[Fig 4] la figure 4 est une représentation schématique de la sous-étape de calcul des coordonnées de vertex de maillage sécurisées auxiliaires associés à une pièce auxiliaire présentant une forme simplifiée de cube ;
[Fig 5] la figure 5 est une représentation schématique d'un dispositif de génération de la maquette numérique sécurisée de l'objet ;
[Fig 6] la figure 6 est une représentation simplifiée d'un graphique illustrant une distribution du nombre de pièces distinctes d'un objet, notamment d'un aéronef, en fonction de la taille de la diagonale d'une boîte englobante de ces pièces et d'un graphique illustrant une distribution du nombre d'occurrences des pièces d'un objet, notamment d'un aéronef, en fonction de la taille de la diagonale d'une boîte englobante de ces pièces ; et
[Fig 7] la figure 7 est une représentation schématique du procédé de génération d'une maquette numérique sécurisée d'une portion d'aéronef selon l'invention.

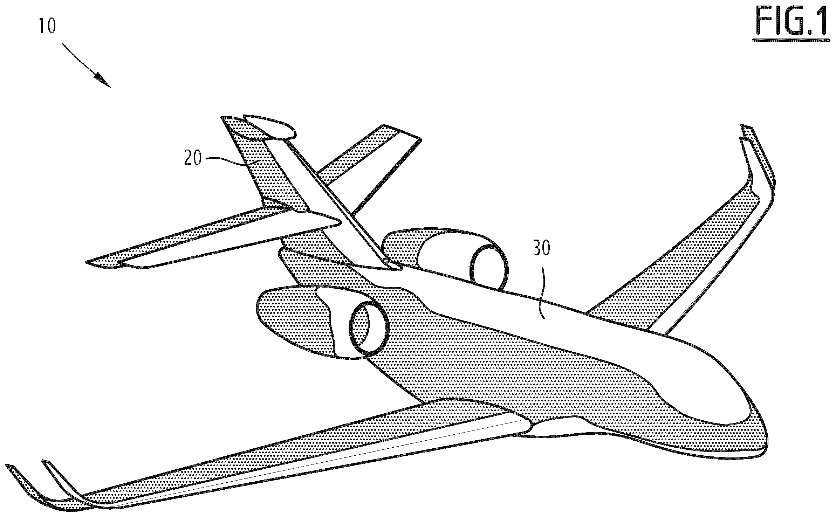

En référence aux figures 1 à 4 on décrit une maquette numérique d'un objet 10.

Dans un exemple spécifique de la description, l'objet 10 est une portion d'aéronef. Il est bien sûr entendu que l'invention ne se limite pas à la génération d'une maquette numérique d'une portion d'aéronef.

Dans l'exemple de la figure 1, la portion d'aéronef correspond à l'aéronef entier.

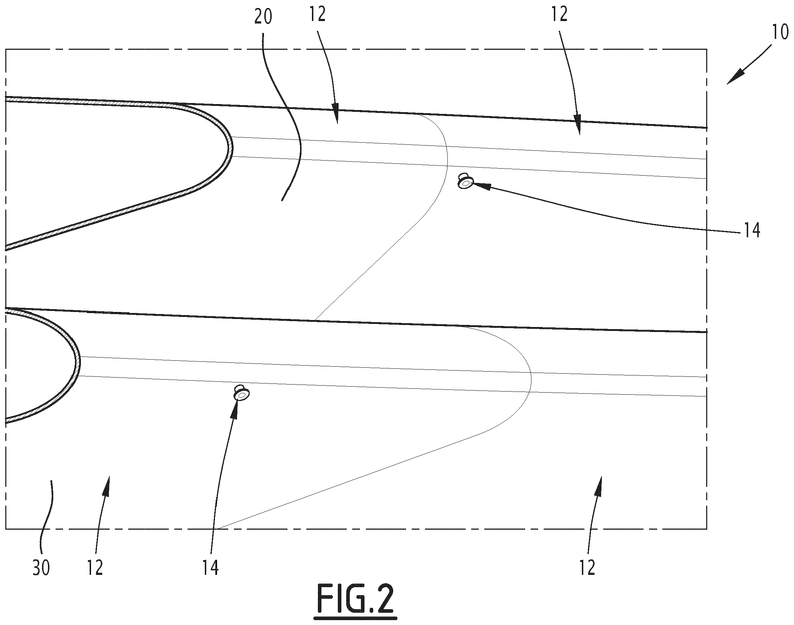

Dans l'exemple de la figure 2, la portion d'aéronef correspond à une aile de l'aéronef.

La portion d'aéronef comprend une pluralité de pièces.

Dans le cadre de l'invention, les pièces de la portion d'aéronef illustrées sur la maquette numérique sont chacune une pièce principale ou une pièce auxiliaire montée sur une pièce principale. La classification des pièces de la portion d'aéronef en tant que pièce principale ou pièce auxiliaire sera détaillée ci-dessous.

Sur l'exemple de la figure 2, la portion d'aéronef comprend des éléments de revêtement 12 d'aile fixés sur des nervures, des lisses et des semelles de longerons de voilure par l'intermédiaire de rivets 14. Dans cet exemple, les éléments de revêtement 12 sont des pièces principales et les rivets 14 sont des pièces auxiliaires montées sur les éléments de revêtement 12.

Sur les figures 1 et 2, sont illustrées une maquette numérique originale 20 de la portion d'aéronef correspondante et une maquette numérique sécurisée 30 de ladite portion d'aéronef.

La maquette numérique originale 20 correspond à une représentation numérique de la portion d'aéronef qui présente des dimensions géométriques correspondant aux dimensions géométriques réelles de ladite portion d'aéronef.

La maquette numérique sécurisée 30 correspond à une représentation numérique de la portion d'aéronef qui présente des dimensions géométriques sécurisées différentes des dimensions géométriques réelles de ladite portion d'aéronef, tout en restant proches de ces dimensions géométriques réelles.

La maquette numérique sécurisée 30 peut ainsi être dévoilée à une tierce personne tout en permettant de conserver secrètes les grandeurs géométriques réelles des pièces de la portion d'aéronef et tout en conservant une forme globale de la portion d'aéronef qui soit réaliste et cohérente.

Par exemple, les grandeurs géométriques à sécuriser en ce qui concerne une nacelle moteur de l'aéronef sont :
- le volume global de la nacelle moteur avec par exemple une variation entre le volume global réel et le volume global sécurisé sensiblement égale à +5% ;
- la longueur de la nacelle moteur, avec par exemple une variation entre la longueur réelle et la longueur sécurisée sensiblement égale à -3% ;
- la distance minimale entre la nacelle moteur et le fuselage avec par exemple une variation entre la distance minimale réelle et la distance minimale sécurisée sensiblement égale à +3% ;
- l'orientation de l'axe moteur de la nacelle moteur avec par exemple une variation entre l'axe moteur réel et l'axe moteur sécurisé sensiblement égale à -1°.

Dans l'exemple de la figure 1, la maquette numérique originale 20 de l'aéronef est superposée sur la maquette numérique sécurisée 30 du même aéronef.

Dans l'exemple de la figure 2, la maquette numérique sécurisée 30 de l'aile est décalée dans l'espace par rapport à la maquette numérique originale 20 du fait des déformations appliquées à la maquette numérique originale 20 pour obtenir la maquette numérique sécurisée 30.

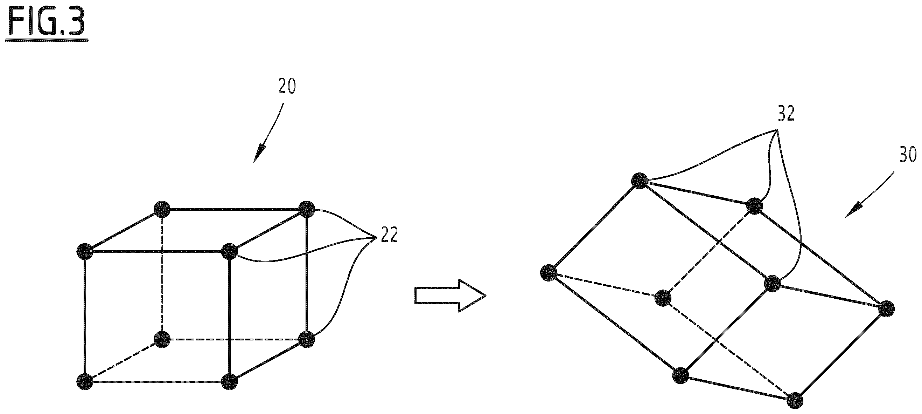

Sur l'exemple de la figure 3, on décrit une maquette numérique originale 20 d'une pièce principale simplifiée de portion d'aéronef et une maquette numérique sécurisée 30 de ladite pièce principale simplifiée obtenue par un procédé selon l'invention, qui sera décrit plus loin.

La pièce principale simplifiée est de forme cubique. Selon l'exemple de la figure 3, la maquette numérique originale 20 de la pièce principale simplifiée subit une translation, une rotation et une distorsion pour obtenir la maquette numérique sécurisée 30 de la pièce principale simplifiée.

La maquette numérique originale 20 de la pièce principale simplifiée comprend une pluralité de vertex de maillage originaux principaux 22. Chaque vertex de maillage original principal 22 présente des coordonnées spatiales x, y, z relatives à un repère absolu. La maquette numérique sécurisée 30 de la pièce principale simplifiée comprend une pluralité de vertex de maillage sécurisés principaux 32. Chaque vertex de maillage sécurisé principal 32 présente des coordonnées spatiales x', y', z' relatives au repère absolu.

Comme il sera détaillé plus bas, les coordonnées de vertex de maillage sécurisé principaux 32 sont calculées par application de matrices de transformation aux coordonnées de vertex de maillage originaux principaux 22, les matrices de transformations étant chacune égale à la somme d'une matrice de translation, d'une matrice de rotation et d'une matrice de distorsion. En d'autres termes, les coordonnées spatiales x', y', z' des vertex de maillage sécurisés principaux 32 sont de la forme x' = f(x, y, z), y' = g(x, y, z) et z' = h(x, y , z) où f, g et h sont des fonctions de transformation composant la matrice de transformation correspondante.

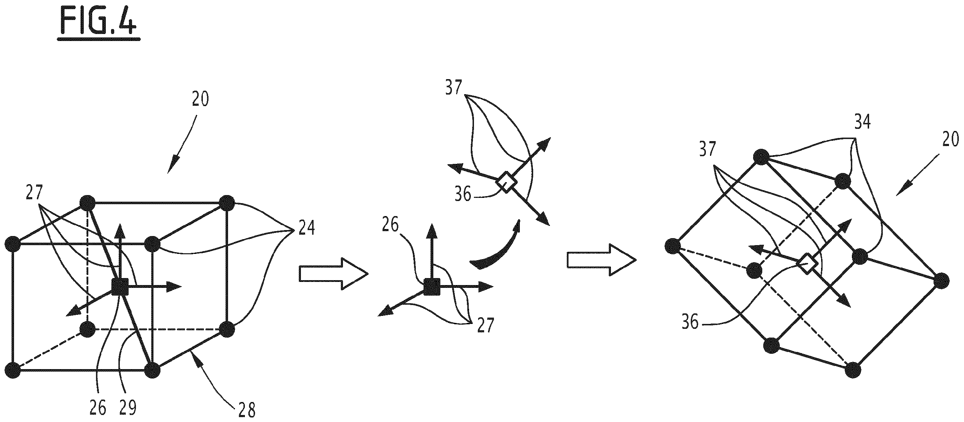

Sur l'exemple de la figure 4, on décrit une maquette numérique originale 20 d'une pièce auxiliaire simplifiée de portion d'aéronef et une maquette numérique sécurisée 30 de ladite pièce auxiliaire simplifiée obtenue par le procédé selon l'invention. Par exemple, la pièce auxiliaire simplifiée est montée sur une pièce principale telle que décrite ci-dessus.

La pièce auxiliaire simplifiée est de forme cubique. Selon l'exemple de la figure 4 et conformément au procédé selon l'invention, la maquette numérique originale 20 de la pièce principale simplifiée subit une translation et une rotation sans distorsion pour obtenir la maquette numérique sécurisée de la pièce auxiliaire simplifiée.

La maquette numérique originale 20 de la pièce auxiliaire simplifiée comprend une pluralité de vertex de maillage originaux auxiliaires 24. Chaque vertex de maillage original auxiliaire 24 présente des coordonnées spatiales x, y, z relatives au repère absolu. La maquette numérique sécurisée 30 de la pièce auxiliaire simplifiée comprend une pluralité de vertex de maillage sécurisés auxiliaires 34. Chaque vertex de maillage sécurisé auxiliaire 34 présente des coordonnées spatiales x', y', z' relatives au repère absolu.

Comme il sera détaillé plus bas, les coordonnées de vertex de maillage sécurisé auxiliaires 34 associés à une pièce auxiliaire sont calculées par application d'une matrice de transformation simplifiée aux coordonnées de vertex de maillage originaux auxiliaires 24 associés à ladite pièce auxiliaire, notamment aux coordonnées de chacun des vertex de maillage originaux auxiliaires 24 associés à ladite pièce auxiliaire. En d'autres termes, les coordonnées spatiales x', y', z' des vertex de maillage sécurisés auxiliaires 34 sont de la forme x' = a(x, y, z), y' = b(x, y, z) et z' = c(x, y , z) où a, b et c sont des fonctions de transformation composant la matrice de transformation simplifiée correspondante.

La matrice de transformation simplifiée est égale à la somme d'une matrice de translation, d'une matrice de rotation et d'une matrice de distorsion nulle. La matrice de transformation simplifiée correspond ainsi à une translation et/ou une rotation sans distorsion.

Chaque maille de la maquette numérique originale 20 ou de la maquette numérique sécurisée 30 est délimitée par au moins trois vertex de maillage.

Sur l'exemple de la figure 4, un centre de gravité original 26 et des axes d'inertie originaux 27 de la pièce auxiliaire simplifiée sont illustrés.

Un centre de gravité sécurisé 36 et des axes d'inertie sécurisés 37 de la pièce auxiliaire simplifiée sont également illustrés.

Egalement, sur l'exemple de la figure 4, une boîte englobante 28 (ou « *bounding box »* en anglais) englobant la pièce auxiliaire simplifiée est également illustrée. Par « boîte englobante », on entend le plus petit volume (parallélépipédique) englobant la géométrie de la pièce auxiliaire. La boîte englobante 28 est notamment orientée selon les axes d'inertie originaux 27 de la pièce auxiliaire. Autrement dit, les faces de la boîte englobante sont chacune orthogonale à un axe d'inertie original 27 de la pièce auxiliaire. Dans l'exemple de la figure 4, la pièce auxiliaire simplifiée ayant une forme simple de cube, la maquette numérique originale 20 de ladite pièce auxiliaire simplifiée présente une forme sensiblement identique à la forme réelle de ladite pièce auxiliaire simplifiée, de sorte que la boîte englobante 28 est délimitée par l'ensemble des faces de la maquette numérique originale 20. En d'autres termes, dans ce cas simple, les coins de la boîte englobante 28 correspondent aux vertex de maillage originaux principaux 22 de la maquette numérique originale.

En outre, une diagonale 29 de la boîte englobante 28 est également illustrée sur la figure 4.

Avantageusement, les fonctions a, b et c sont des fonctions continues (au moins C⁰) dans le domaine de la boîte englobante 28.

Encore avantageusement, les portions de maquette numérique sécurisée 30 correspondant aux coordonnées de vertex de maillage sécurisés principaux 32 et les portions de maquette numérique sécurisées 30 correspondant aux coordonnées de vertex de maillage sécurisés auxiliaires 34 présente un chevauchement nul. En d'autres termes, les volumes délimités par les vertex de maillage sécurisés principaux 32 et les volumes délimités par les vertex de maillage sécurisés auxiliaires 34 ne se collisionnent pas.

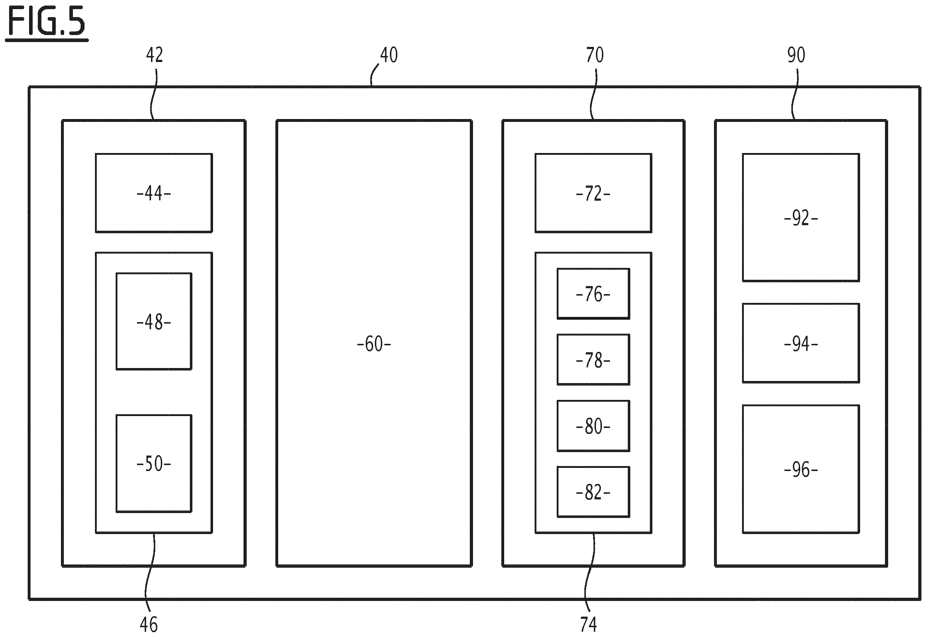

En référence à la figure 5, on décrit un dispositif 40 de génération d'une maquette numérique sécurisée 30 d'une portion d'aéronef à partir d'une maquette numérique originale 20 de ladite portion d'aéronef.

Le dispositif 40 comprend une unité 70 de calcul de coordonnées de vertex de maillage sécurisés 32, 34 de la maquette numérique sécurisée 30.

Avantageusement, le dispositif 40 comprend en outre :
- une unité 42 de calcul de coordonnées de vertex de maillage originaux 22, 24 de la maquette numérique originale 20 ;
- une unité 60 de classification de chaque pièce de la portion d'aéronef ; et
- une unité 90 d'enregistrement dans une base de données des coordonnées de vertex de maillage sécurisés 32, 34.

L'unité 42 comprend un module 44 de maillage de la portion d'aéronef.

Avantageusement, l'unité 42 comprend en outre un module d'optimisation 46.

Le module de maillage 44 est configuré pour générer la maquette numérique originale 20 brute de la portion d'aéronef.

Le module d'optimisation 46 est configuré pour optimiser la maquette numérique originale 20 brute afin d'obtenir une maquette numérique originale 20 optimisée.

Le module d'optimisation comprend notamment un sous-module de décimation 48 et un sous-module d'enrichissement 50.

Le sous-module de décimation 48 est configuré pour décimer la maquette numérique originale 20 brute afin d'obtenir une maquette numérique originale 20 décimée de la portion d'aéronef.

Le sous-module d'enrichissement 50 est configuré pour enrichir au moins une partie de la maquette numérique originale brute, à enrichir, afin d'obtenir une partie enrichie de maquette numérique originale 20 enrichie. L'enrichissement comprend l'augmentation du nombre de mailles relatifs à ladite partie à enrichir.

L'unité de classification 60 est configurée pour classifier chaque pièce de la portion d'aéronef en tant que pièce principale ou pièce auxiliaire.

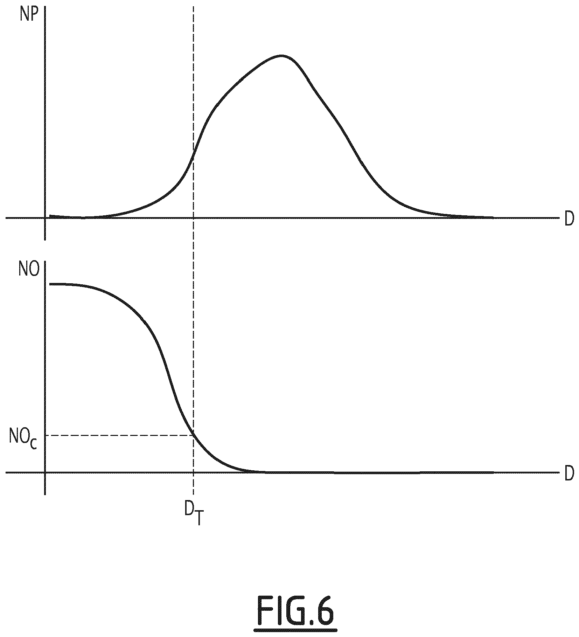

La figure 6 présente un premier graphique (en haut de la figure 6) illustrant un exemple d'une distribution du nombre de pièces distinctes NP d'un objet, notamment d'un aéronef, en fonction de la taille D de la diagonale d'une boîte englobante de ces pièces, et un deuxième graphique (en bas de la figure 6) illustrant un exemple d'une distribution du nombre d'occurrences NO de chaque pièce d'un objet, notamment dudit aéronef du premier graphique, en fonction de la taille D de la diagonale d'une boîte englobante de ces pièces.

Comme visible sur la figure 6, la distribution du nombre de pièces distinctes NP en fonction de la taille D de la diagonale de boîte englobante est similaire à une fonction gaussienne. Le premier graphique de la figure 6 illustre donc que l'objet (ici l'aéronef) présente un nombre NP relativement faible de pièces distinctes présentant une taille D de diagonale de boîte englobante relativement faible (extrémité gauche de la courbe). En outre, le deuxième graphique de la figure 6 illustre que l'objet (le même aéronef) présente des nombres d'occurrence relativement élevés pour chaque pièce distincte présentant une taille D de diagonale de boîte englobante relativement faible (extrémité gauche de la courbe). En d'autres termes, l'objet présente peu de pièces distinctes ayant une taille D de diagonale de boîte englobante relativement faible mais ces pièces distinctes sont présentes un nombre relativement élevé de fois dans l'aéronef (nombre d'occurrences relativement élevé par rapport aux pièces présentant une taille D de diagonale de boîte englobante plus grande).

En référence à la figure 6, chaque pièce est avantageusement classifiée comme étant :
- une pièce principale si la valeur de la diagonale 29 de la boîte englobante 28 associée à ladite pièce est supérieure ou égale à une valeur seuil D_{T} ;
- une pièce auxiliaire si la valeur de la diagonale 29 de la boîte englobante 28 associée à ladite pièce est inférieure à la valeur seuil D_{T}.

Avantageusement, la valeur seuil D_{T} est telle que le nombre d'occurrences NO des pièces dont la taille D de la diagonale de la boîte englobante correspondante est inférieure à la valeur seuil D_{T}, est supérieur à un nombre d'occurrences cible NOc. Par exemple, le nombre d'occurrences cible NOc est égale à 2.

Le nombre d'occurrences cible NO_{c} dépend des dimensions de la maquette numérique originale 20, d'un niveau de détails présent sur la maquette numérique originale 20 et/ou d'un niveau de précision cible souhaité pour la maquette numérique sécurisée 30.

Le nombre d'occurrences cible NO_{c} est notamment défini de sorte que les pièces présentant un nombre d'occurrences NO relativement élevé soient classifiés comme étant des pièces auxiliaires.

Avantageusement, la valeur seuil D_{T} est proportionnelle à une déformée maximale souhaitée.

La déformée maximale souhaite est, par exemple, la plus grande distance souhaitée parmi des distances souhaitées entre chacun des vertex de maillage originaux 22, 24 de la maquette numérique originale 20 et le vertex de maillage sécurisé 32, 34 correspondant de la maquette numérique sécurisée 30.

L'unité 70 est configurée pour calculer les coordonnées de vertex de maillage sécurisés 32, 34 de la maquette numérique sécurisée 30.

L'unité 70 comprend un module 72 de calcul des coordonnées de vertex de maillage sécurisés principaux 32 et un module 74 de calcul des coordonnées de vertex de maillage sécurisés auxiliaires 34.

Le module 72 est configuré pour calculer les coordonnées de vertex de maillage sécurisés principaux 32 associés à chaque pièce principale par application des matrices de transformation aux coordonnées des vertex de maillage originaux principaux 22 associés à chaque pièce principale correspondante.

Le module 74 est configuré pour calculer les coordonnées de vertex de maillage sécurisés auxiliaires 34 associés à chaque pièce auxiliaire par application d'une matrice de transformation simplifiée aux coordonnées des vertex de maillage originaux auxiliaires 24 associés à chaque pièce auxiliaire correspondante.

Notamment, le module 74 est configuré pour calculer les coordonnées de vertex de maillage sécurisés auxiliaires 34 associés à plusieurs pièces auxiliaires, notamment à une pluralité de pièces auxiliaires identiques, montées sur une même pièce principale par application d'une même matrice de transformation simplifiée aux coordonnées des vertex de maillage originaux auxiliaires 24 associés à chacune de ces dites pièces auxiliaires.

Le module 74 comprend notamment :
- un sous-module 76 de calcul des coordonnées de centre de gravité original 26 et de composantes de vecteurs d'axes d'inertie originaux 27 ;
- un sous-module 78 de calcul des coordonnées de centres de gravité sécurisés 36 ;
- un sous-module 80 de calcul de composantes de vecteurs d'axes d'inertie sécurisés 37 ; et
- un sous-module 82 de calcul de matrices de transformation simplifiées.

Le sous-module 76 est configuré pour calculer les coordonnées du centre de gravité original 26 et des composantes des vecteurs d'axes d'inertie originaux 27 de chaque pièce auxiliaire.

Le sous-module 78 est configuré pour calculer les coordonnées du centre de gravité sécurisé 36 de chaque pièce auxiliaire par application d'une matrice de translation locale aux coordonnées du centre de gravité original 26 correspondant. Par matrice de translation « locale », on entend la matrice de translation correspondant à la translation subie localement au centre de gravité original 26 par la pièce auxiliaire.

Le sous-module 80 est configuré pour calculer les composantes des vecteurs d'axes d'inertie sécurisés 37 de chaque pièce auxiliaire par application d'une matrice de rotation locale aux composantes des vecteurs d'axes d'inertie originaux 27 correspondants. Par matrice de rotation « locale », on entend la matrice de rotation correspondant à la rotation subie localement par les axes d'inerties originaux 27 de la pièce auxiliaire.

Le sous-module 82 est configuré pour calculer une matrice de transformation simplifiée à partir de la matrice de translation locale et de la matrice de rotation local. En particulier, la matrice de transformation simplifiée est égale à la somme de la matrice de translation locale et à la matrice de rotation locale. En d'autres termes, pour la matrice de transformation simplifiée, la matrice de distorsion est nulle.

L'unité 90 est configuré pour enregistrer les coordonnées de vertex de maillage sécurisés 32, 24.

L'unité 90 comprend une base de données 92, un module 94 d'enregistrement des cordonnées de vertex de maillage sécurisés principaux 32 et un module 96 d'enregistrement des coordonnées de vertex de maillage sécurisés auxiliaires 34.

La base de données 92 est configuré pour stocker des données correspondant aux coordonnées de vertex de maillage sécurisés 32, 34.

Le module 94 est configuré pour enregistrer dans la base de données 92 les coordonnées de vertex de maillage sécurisés principaux 32 associés à chaque pièce principale de la portion d'aéronef pour chaque matrice de transformation.

Le module 96 est configuré pour enregistrer dans la base de données 94 les coordonnées de vertex de maillage sécurisés auxiliaires 34 associés à chaque pièce auxiliaire de la portion d'aéronef pour chaque matrice de transformation simplifiée.

Dans l'exemple de la figure 5, le dispositif 40 comprend un système de traitement d'informations formée par exemple d'une mémoire et d'un processeur associé à la mémoire.

Dans l'exemple de la figure 5, les unités 42, 60, 70 et 90, les modules 44, 46, 72, 74, 92, 94, 96 et les sous-modules 48, 50, 76, 78, 80 et 82 sont réalisés chacun sous forme d'un logiciel, ou d'une brique logicielle, exécutable par le processeur et stocké dans la mémoire.

En variante non représentée, les unités 42, 60, 70 et 90, les modules 44, 46, 72, 74, 92, 94, 96 et les sous-modules 48, 50, 76, 78, 80 et 82 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*)*.*

Lorsque le dispositif 40 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

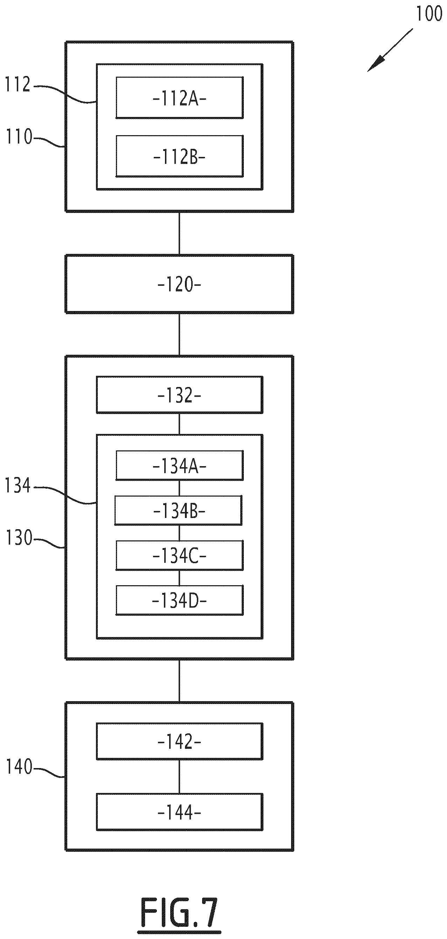

En référence à la figure 7, on décrit un procédé 100 de génération de la maquette numérique sécurisée 30 d'une portion d'aéronef selon l'invention, à partir de la maquette numérique originale 20 de ladite portion d'aéronef.

Le procédé 100 est mis en oeuvre par ordinateur, notamment par le dispositif 40 décrit ci-dessus.

Avantageusement, le procédé 100 comprend une étape 110 de calcul des coordonnées de vertex de maillage originaux 22, 24 de la maquette numérique originale 20.

Notamment, l'étape 110 comporte un maillage (ou numérisation ou encore discrétisation spatiale ou encore tessellation) de la portion d'aéronef pour obtenir une maquette numérique originale 20 brute de la portion d'aéronef.

En particulier, l'étape 110, notamment le maillage, comporte une sous-étape 112 d'optimisation de la maquette numérique originale brute.

Par exemple, la sous-étape 112 comprend une décimation 112A de la maquette numérique originale 20 brute afin d'obtenir une maquette numérique originale 20 décimée de la portion d'aéronef. Avantageusement, la maquette numérique originale 20 décimée est utilisée pour une étape 130 de calcul des coordonnées de vertex de maillage sécurisés 32, 34 de la maquette numérique sécurisée 30, décrite ci-dessous.

Selon un autre exemple, la sous-étape 112 comprend un enrichissement 1128 d'au moins une partie de la maquette numérique originale 20 brute à enrichir afin d'obtenir une partie de maquette numérique originale 20 enrichie. L'enrichissement comprend l'augmentation du nombre de mailles relatifs à ladite partie de la maquette numérique originale brut à enrichir. Avantageusement, ladite partie de maquette numérique originale 20 enrichie est utilisée pour l'étape 130 de calcul des coordonnées de vertex de maillage sécurisés 32, 34 de la maquette numérique sécurisée 30, décrite ci-dessous.

Encore avantageusement, le procédé 100 comprend une étape 120 de classification de chaque pièce en tant que pièce principale ou pièce auxiliaire. L'étape de classification 120 permet de trier les pièces de la portion d'aéronef afin de distinguer les pièces pour lesquelles il est possible de négliger la composante de distorsion (et donc de simplifier le calcul des coordonnées de vertex de maillage sécurisés), notamment les pièces de relativement petit volume, sans nuire à la cohérence de la maquette numérique sécurisée 30.

Le procédé 100 comprend une étape 130 de calcul des coordonnées de vertex de maillage sécurisés 32, 34 de la maquette numérique sécurisée 30 par application de matrices de transformation aux coordonnées de vertex de maillage originaux 22, 24 de la maquette numérique originale 20.

L'étape 130 comprend :
- une sous étape 132 de calcul des coordonnées de vertex de maillage sécurisés principaux 32 associés à au moins une pièce principale de la portion d'aéronef par application des matrices de transformation aux coordonnées de vertex de maillage originaux principaux 22 associés à l'au moins une pièce principale de la potion d'aéronef 10 ;
- une sous-étape 134 de calcul des coordonnées de vertex de maillage sécurisés auxiliaires 34 associés à au moins une pièce auxiliaire de la portion d'aéronef montée sur l'au moins une pièce principale, par application d'une matrice de transformation simplifiée aux coordonnées de vertex de maillage originaux auxiliaires 24 associés à l'au moins une pièce auxiliaire de la portion d'aéronef.

Avantageusement, au moins une matrice de transformation appliquée lors de la sous-étape 132 est égale à la somme d'une matrice de translation, d'une matrice de rotation et d'une matrice de distorsion, dans laquelle la matrice de distorsion est non-nulle. Selon un exemple particulier, chacune de l'ensemble des matrices de transformation appliquées lors de la sous-étape 132 est égale à la somme d'une matrice de translation, d'une matrice de rotation et d'une matrice de distorsion, dans laquelle la matrice de distorsion est non-nulle.

L'application de matrices de transformation simplifiées pour les pièces qualifiées comme auxiliaires, montées sur une pièce principale, permet de simplifier la génération de la maquette sécurisée tout en assurant l'obtention d'une maquette sécurisée cohérente, c'est-à-dire une maquette sécurisée dans laquelle le chevauchement entre les portions de maquette numérique sécurisée correspondant aux coordonnées de vertex de maillage sécurisés principaux et les portions de maquette numérique sécurisées correspondant aux coordonnées de vertex de maillage sécurisés auxiliaires présentent un chevauchement sensiblement nul. En d'autres termes, lors de la visualisation de la maquette sécurisée, les collisions entre les pièces auxiliaires et les pièces principales sont sensiblement invisibles pour l'observateur.

Avantageusement, lors de la sous-étape 134, les coordonnées de vertex de maillage sécurisés auxiliaires 34 associés à une pluralité de pièces auxiliaires, notamment à une pluralité de pièces auxiliaires identiques, montées sur une même pièce principale sont calculées par application d'une même matrice de transformation simplifiée aux coordonnées de vertex de maillage originaux auxiliaires 24 associés à chacune de ces dites pièces auxiliaires.

Grâce à la sous-étape 134 et notamment grâce à l'étape 120 de classification, la réalisation de la maquette numérique sécurisée est simplifiée puisque les pièces de relativement petite taille (celles classifiées comme étant pièces auxiliaires), sont translatées et/ou tournées sans distorsion, de manière similaire.

Avantageusement, la sous-étape 134 comprend :
- le calcul 134A des coordonnées de centre de gravité original 26 et des composantes de vecteurs d'axes d'inertie originaux 27 de l'au moins une pièce auxiliaire (partie gauche de la figure 4) ;
- le calcul 134B des coordonnées d'un centre de gravité sécurisé 36 par application d'une matrice de translation locale aux coordonnées du centre de gravité original 26 (partie centrale de la figure 4) ;
- le calcul 134C des composantes des vecteurs d'axes d'inertie sécurisés 37 par application d'une matrice de rotation locale aux composantes des vecteurs des axes d'inertie originaux 27 (partie centrale de la figure 4) ;
- le calcul 134D d'une matrice de transformation simplifiée à parti de la matrice de translation locale et de la matrice de rotation locale.

La matrice de transformation simplifiée calculée est appliquée aux coordonnées des vertex de maillage originaux auxiliaires 24 associés à l'au moins une pièce auxiliaire, notamment à l'ensemble des vertex de maillage originaux auxiliaires 24 associés à l'au moins une pièce auxiliaire, pour calculer les coordonnées de vertex de maillage sécurisés auxiliaires 34 associés à ladite au moins une pièce auxiliaire (partie droite de la figure 4).

Avantageusement, le procédé 100 comprend un enregistrement 140 des coordonnées de vertex de maillage sécurisés 32, 34.

En particulier, le procédé 100 comprend :
- une étape 142 d'enregistrement dans la base de données 92 des coordonnées de vertex de maillage sécurisés principaux 32 associés à chaque pièce principale de la portion d'aéronef pour chaque matrice de transformation ;
- une étape 144 d'enregistrement dans la base de données 92 des cordonnées de vertex de maillage sécurisés auxiliaires 34 associés à chaque pièce auxiliaire de la portion d'aéronef pour chaque matrice de transformation simplifiée.

Grâce à l'invention, la maquette numérique sécurisée 30 de la portion d'aéronef est obtenue en requérant une puissance de calcul et/ou un temps de calcul moindres en comparaison aux procédés de l'états de la technique.

## Revendications

1. Procédé (100) de génération d'une maquette numérique sécurisée (30) d'un objet (10) à partir d'une maquette numérique originale (20) dudit objet (10), le procédé (100) étant mis en oeuvre par ordinateur,
le procédé (100) comprenant une étape (130) de calcul de coordonnées de vertex de maillage sécurisés (32, 34) de la maquette numérique sécurisée (30) par application de matrices de transformation à des coordonnées de vertex de maillage originaux (22, 24) de la maquette numérique originale (20), les matrices de transformation étant chacune égale à la somme d'une matrice de translation, d'une matrice de rotation et d'une matrice de distorsion,
**caractérisé en ce que** l'étape (130) de calcul des coordonnées de vertex de maillage sécurisés (32, 34) comprend :
- une sous-étape (132) de calcul des coordonnées de vertex de maillage sécurisés principaux (32) associés à au moins une pièce principale de l'objet (10) par application de matrices de transformation aux coordonnées de vertex de maillage originaux principaux (22) associés à l'au moins une pièce principale de l'objet (10) ; et
- une sous-étape (134) de calcul des coordonnées de vertex de maillage sécurisés auxiliaires (34) associés à au moins une pièce auxiliaire de l'objet (10) montée sur l'au moins une pièce principale, par application d'une matrice de transformation simplifiée aux coordonnées de vertex de maillage originaux auxiliaires (24) associés à l'au moins une pièce auxiliaire de l'objet (10), la matrice de transformation simplifiée étant égale à la somme d'une matrice de translation, d'une matrice de rotation et d'une matrice de distorsion nulle.

2. Procédé (100) selon la revendication 1, dans lequel au moins une matrice de transformation appliquée lors de la sous-étape (132) de calcul des coordonnées de vertex de maillage sécurisés principaux (32) associés à l'au moins une pièce principale de l'objet (10) est égale à la somme d'une matrice de translation, d'une matrice de rotation et d'une matrice de distorsion non-nulle.

3. Procédé (100) selon la revendication 1 ou 2, dans lequel lors de la sous-étape (134) de calcul des coordonnées de vertex de maillage sécurisés auxiliaires, des coordonnées de vertex de maillage sécurisés auxiliaires (34) associés à une pluralité de pièces auxiliaires, notamment à une pluralité de pièces auxiliaires identiques, montées sur une même pièce principale, sont calculées par application d'une même matrice de transformation simplifiées aux coordonnées de vertex de maillage originaux auxiliaires (24) associés à chacune de ces dites pièces auxiliaires.

4. Procédé (100) selon l'une quelconque des revendications précédentes, dans lequel l'objet (10) comprend une pluralité de pièces, le procédé (100) comprenant une étape (120) de classification de chaque pièce en tant que pièce principale ou pièce auxiliaire,
chaque pièce étant classifiée comme étant :
- une pièce principale si la valeur de la diagonale (29) d'une boîte englobante (28) associée à ladite pièce est supérieure ou égale à une valeur seuil (D_{T}) ;
- une pièce auxiliaire si la valeur de la diagonale (29) d'une boîte englobante (28) associée à ladite pièce est inférieure à la valeur seuil (D_{T}).

5. Procédé (100) selon la revendication 4, dans lequel la valeur seuil (D_{T}) est telle qu'un nombre d'occurrences (NO) des pièces de l'objet (10) dont une taille (D) de la diagonale (29) de la boîte englobante (28) correspondante est inférieure à la valeur seuil (D_{T}), est supérieur à un nombre d'occurrences cible (NOc).

6. Procédé (100) selon l'une quelconque des revendications précédentes, dans lequel la sous-étape (134) de calcul des coordonnées de vertex de maillage sécurisés auxiliaires (34) associée à une pièce auxiliaire comprend :
- le calcul (134A) des coordonnées d'un centre de gravité original (26) et des composantes de vecteurs d'axes d'inertie originaux (27) de ladite pièce auxiliaire ;
- le calcul (134B) des coordonnées d'un centre de gravité sécurisé (36) par application d'une matrice de translation locale aux coordonnées du centre de gravité original (26) ;
- le calcul (134C) des composantes des vecteurs d'axes d'inertie sécurisés (37) par application d'une matrice de rotation locale aux composantes des vecteurs des axes d'inertie originaux (27) ;
- le calcul (134D) d'une matrice de transformation simplifiée à partir de la matrice de translation locale et de la matrice de rotation locale ;
ladite matrice de transformation simplifiée étant appliquée aux coordonnées des vertex de maillage originaux auxiliaires (24) associés à ladite pièce auxiliaire pour calculer les coordonnées de vertex de maillage sécurisés auxiliaires (34) associés à ladite pièce auxiliaire.

7. Procédé (100) selon l'une quelconque des revendications précédentes, dans lequel les portions de maquette numérique sécurisée (30) correspondant aux coordonnées de vertex de maillage sécurisés principaux (32) et les portions de maquette numérique sécurisées (30) correspondant aux coordonnées de vertex de maillage sécurisés auxiliaires (34) présentent un chevauchement sensiblement nul.

8. Procédé (100) selon l'une quelconque des revendications précédentes, comprenant une étape (110) de calcul des coordonnées des vertex de maillage originaux (22, 24) de la maquette numérique originale (20) comportant un maillage de l'objet (10) pour obtenir une maquette numérique originale (20) brute de l'objet (10).

9. Procédé (100) selon la revendication 8, dans lequel l'étape (110) de calcul des coordonnées des vertex de maillage originaux (22, 24) comprend une sous-étape (112) d'optimisation de la maquette numérique originale (20) brute.

10. Procédé (100) selon la revendication 9, dans lequel la sous-étape d'optimisation (112) comprend une décimation (112A) de la maquette numérique originale (20) brute afin d'obtenir une maquette numérique originale (20) décimée de l'objet (10), ladite maquette numérique originale (20) décimée étant utilisée pour l'étape (130) de calcul des coordonnées de vertex de maillage sécurisés (32, 34) de la maquette numérique sécurisée (30).

11. Procédé (100) selon la revendication 9 ou 10, dans lequel la sous-étape d'optimisation (112) comprend un enrichissement (112B) d'au moins une partie de la maquette numérique originale (20) brute à enrichir afin d'obtenir une partie de maquette numérique originale (20) enrichie, ladite partie de maquette numérique originale (20) enrichie étant utilisée pour l'étape (130) de calcul des coordonnées de vertex de maillage sécurisés (32, 34) de la maquette numérique sécurisée (30),
l'enrichissement (112B) comprenant l'augmentation du nombre de mailles relatifs à ladite partie de la maquette numérique originale (20) brut à enrichir.

12. Procédé (100) selon l'une quelconque des revendications précédentes, comprenant en outre :
- une étape (142) d'enregistrement dans une base de données (92) des coordonnées de vertex de maillage sécurisés principaux (32) associés à chaque pièce principale de l'objet (10) pour chaque matrice de transformation ;
- une étape (142) d'enregistrement dans la base de données (92) des cordonnées de vertex de maillage sécurisés auxiliaires (34) associés à chaque pièce auxiliaire de l'objet (10) pour chaque matrice de transformation simplifiée.

13. Dispositif (40) de génération d'une maquette numérique sécurisée (30) d'un objet (10) à partir d'une maquette numérique originale (20) dudit objet (10), propre à mettre en oeuvre le procédé (100) selon l'une quelconque des revendications précédentes, le dispositif (40) comprenant une unité (70) de calcul des coordonnées des vertex de maillage sécurisés (32, 34) de la maquette numérique sécurisée (30) par application de matrices de transformation aux coordonnées de vertex de maillage originaux (22, 24) de la maquette numérique originale (20), les matrices de transformation étant chacune égale à la somme d'une matrice de translation, d'une matrice de rotation et d'une matrice de distorsion,
l'unité de calcul (70) comprenant :
- un module (72) de calcul des coordonnées de vertex de maillage sécurisés principaux (32) configuré pour calculer les coordonnées des vertex de maillage sécurisés principaux (32) associés à l'au moins une pièce principale de l'objet (10) par application des matrices de transformation aux coordonnées des vertex de maillage originaux principaux (22) associés à l'au moins une pièce principale de l'objet (10) ;
- un module (74) de calcul des coordonnées de vertex de maillage sécurisés auxiliaires (34) configuré pour calculer les coordonnées des vertex de maillage sécurisés auxiliaires (34) associés à l'au moins une pièce auxiliaire de l'objet (10) montée sur l'au moins une pièce principale, par application d'une matrice de transformation simplifiée aux coordonnées des vertex de maillage originaux auxiliaires (24) associés l'au moins une pièce auxiliaire de l'objet (10), la matrice de transformation simplifiée étant égale à la somme d'une matrice de translation, d'une matrice de rotation et d'une matrice de distorsion nulle.
